# EUROPÄISCHE PATENTSCHRIFT

(11) **EP 3 583 394 B1**
(45) Veröffentlichungstag und Bekanntmachung des Hinweises auf die Patenterteilung: **18.12.2024**
(21) Anmeldenummer: 18707843.1
(22) Anmeldetag: 12.02.2018
(51) Int. Cl.: G01L 1/10, G01L 1/16, G01L 5/04

(54) **SCHWINGSAITENSENSOR UND SCHWINGSAITE FÜR EINEN SCHWINGSAITENSENSOR**
VIBRATING WIRE SENSOR AND VIBRATING WIRE FOR A VIBRATING WIRE SENSOR
CAPTEUR À CORDE VIBRANTE ET CORDE VIBRANTE POUR UN CAPTEUR À CORDE VIBRANTE

(30) Priorität: 15.02.2017 CH 1752017
(43) Veröffentlichungstag der Anmeldung: 25.12.2019
(73) Patentinhaber: DIGI SENS Holding AG, 3280 Murten (CH)
(72) Erfinder: LUSTENBERGER, Martin, 1752 Villars Sur Glâne (CH)
(74) Vertreter: Stump, Beat
(86) Internationale Anmeldenummer: PCT/CH2018/050007
(87) Internationale Veröffentlichungsnummer: WO 2018/148852

(56) Entgegenhaltungen:
- EP-A1- 2 407 765
- DE-A1- 2 534 096
- US-A- 4 656 383

## Beschreibung

Die vorliegende Erfindung betrifft einen Schwingsaitensensor und Schwingsaite für einen Schwingsaitensensor gemäss dem Oberbegriff von Anspruch 1 und 11.

Schwingsaitensensoren sind bekannt und werden in zahlreichen Anwendungen eingesetzt, häufig (aber keineswegs ausschliesslich) um eine aktuelle Grösse wie Deformationen oder Kräfte zu messen. Unter dem Begriff Deformation wird vorliegend die elastische oder auch plastische Verformung von Maschinenelementen im Betrieb verstanden. Solche Deformation kann relevant sein für die Überwachung des sicheren Betriebszustands bei Metallkonstruktionen irgendwelcher Art, oder auch bei nichtmetallischen Bauten wie Gebäuden oder Brücken. Ferner kann über Deformationssensoren eine im Betrieb aktuell wirkende Last erfasst werden, beispielsweise für die Steuerung einer Bewegung. Diese Deformation wird durch den damit als Deformations-/Kraftsensor wirkenden Schwingsaitensensor beispielsweise über die Verschiebung zwischen Messpunkten erfasst, wobei dadurch auf den Sensor eine Kraft wirkt, die ein Mass für die Deformation ist. Ebenso kann der erfindungsgemässe Sensor auch als reiner Kraftsensor eingesetzt werden, beispielsweise in einer Waage.

Schwingsaitensensoren können derartig ausgebildet werden, dass sie kleinste Deformationen bzw. Kraftänderungen fein aufgelöst erfassen und zudem über die Zeit kaum einen Drift aufweisen - insofern sind Schwingsaitensensoren Messdosen oder Dehnmessstreifen qualitativ oft überlegen.

Die US 4 656 383 offenbart einen aus einem Piezomaterial gefertigten Schwinger, der durch an ihm anliegende Elektroden in Schwingung versetzt werden kann. Die EP 2 407 765 offenbart eine aus einem geätzten Silikon bestehende Mikrostruktur mit Erregern und Messkörpern, die ein Piezomaterial aufweisen.

Eine Ausführungsform eines Schwingsaitensensors ist durch die CN 203 595 494 U bekannt geworden und in Fig. 1 dargestellt.

Ersichtlich ist ein Schwingsaitensensor 1 im Betrieb, d.h. unter Messbedingungen, mit einem hier rechteckig ausgebildeten Rahmen 2, mit Festlegeelementen 3,4, die an Querträgern 5,6 des Rahmens 2 angreifen und ihrerseits an einem über ihre Befestigungspunkte 7,8 auf einem zur Entlastung der Figur nicht dargestellten Bauteil festgelegt sind, dessen Deformation gemessen werden soll oder beispielsweise ein Bauteil einer Waage, in welcher das zu wägende Gewicht zu bestimmen ist (die Befestigung kann über eine einfache Verschraubung oder durch eine einfache Einspannung irgendwelcher Art geschehen). Unter den Messbedingungen, hier im Fall einer Deformation des Bauteils oder einer auftretenden, zu messenden Kraft, erfährt

der Sensor 1 eine Kraft beispielsweise in Richtung des Pfeils K (oder dessen Gegenrichtung) wodurch sich sein Rahmen 2 in Kraftwirkung elastisch verformt, was wiederum zu einer Auslenkung der Übertragungshebel 9,10 führt, an deren Köpfen 11,12 eine Schwingsaite 15 mit Hilfe von Klemmstiften 16 eingespannt ist. Da sich auch die Übertragungshebel elastisch verformen, ergibt sich von den Befestigungspunkten 7,8 zu den Köpfen 11,12 bzw. Klemmstiften 16 eine Weg - Kraftübersetzung, so dass die Schwingsaite 15 je nach der aktuell vorhandenen Deformation oder zu messenden Kraft unterschiedlich auf Zug beansprucht wird, wobei natürlich in Ruhelage des Sensors, d.h. ohne Umgebungseinwirkung an den Befestigungspunkten 7,8, die Schwingsaite 15 vorbestimmt gespannt ist. Die Köpfe 11,12 bilden mit den Klemmstiften 16 Einspannstellen für die Schwingsaite 15.

Weiter ersichtlich ist eine Anordnung 17, die im Betrieb ein magnetisches Feld erzeugt, dessen Feldlinien senkrecht auf der Zeichnungsebene stehen und in der linken Hälfte der Anordnung 17 vom Betrachter weg, in der rechten Hälfte zum Betrachter gerichtet sind. Dazu fliesst im Betrieb ein Wechselstrom I durch die Schwingsaite 15, der durch eine wiederum zur Entlastung der Figur weggelassene Elektronik generiert wird. Damit wirkt die dem Wechselstrom I entsprechende Lorentzkraft auf die Schwingsaite, welche diese mit der Frequenz des Wechselstroms zum Schwingen bringt, wobei bei geeigneter Änderung der Frequenz die Schwingsaite schnell in ihre Eigenfrequenz fällt, welche wiederum vom auf sie wirkenden Zug, also von der Verschiebung der Messpunkte 7,8 als Folge einer Deformation oder Krafteinwirkung abhängt. Die Elektronik kann die Eigenfrequenz erkennen und daraus ein Sensorsignal für die Deformation / Krafteinwirkung generieren.

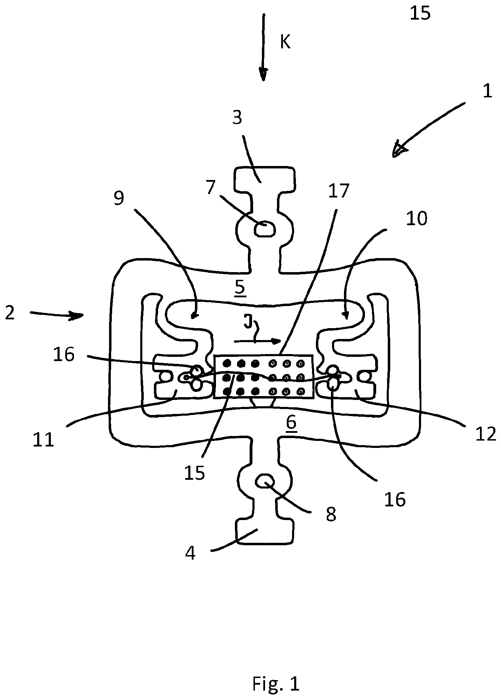

Figur 1 zeigt zusammenfassend einen Schwingsaitensensor mit einer Schwingsaite, die unter Messbedingungen einer zu detektierenden aktuellen Grösse entsprechend unterschiedlich gespannt wird, und mit einer Erregeranordnung zum Erregen der Schwingsaite im Bereich ihrer jeweiligen Eigenfrequenz.

Solchen Schwingsaitensensoren ist nachteilig, dass ihr Stromverbrauch recht hoch ist oder dass bei grober Behandlung die Magnete aus ihrer korrekten Position wegbrechen können, bzw. der Aufwand für die stosssichere Befestigung hoch ist. Hoher Stromverbrauch spielt beispielsweise eine Rolle, wenn eine Brücke mit Deformationssensoren versehen wird, deren Batterien ständig gewechselt oder alternativ verkabelt werden müssen.

Aufgabe der vorliegenden Erfindung ist, Schwingsaitensensoren zu verbessern.

Zur Lösung dieser Aufgabe besitzt ein erfindungsgemässer Schwingsaitensensor die kennzeichnenden Merkmale von Anspruch 1 und eine erfindungsgemässe Schwingsaite die kennzeichnenden Merkmale von Anspruch 11.

Dadurch, dass die Schwingsaite eines Schwingsaitensensors eine piezoelektrische Aktivierungsschicht aufweist, kann der Stromverbrauch gegenüber konventionellen Ausführungen erheblich gesenkt werden. Zudem entfallen Magnete oder andere Elemente für die Erzeugung eines Magnetfelds, und damit die für die Empfindlichkeit des Sensors bei roher Behandlung massgebenden Elemente. Schliesslich ist ein erfindungsgemässer Schwingsaitensensor kompakter aufgebaut.

Dadurch, dass die piezoelektrische Aktivierungsschicht je nach Aktivierungszustand verschiedene Längen aufweist, ergibt sich eine Deformation der Schwingsaite über ihre Länge in der Art einer Bimetallfeder, welche besonders geeignet ist, in einer Saite Schwingungen zu erzeugen.

Erfindungsgemässe Ausführungsformen des Schwingsaitensensors bzw. der Schwingsaite besitzen Merkmale gemäss den abhängigen Ansprüchen.

Die Erfindung wird anhand der Figuren näher beschrieben.

Es zeigt:
- Fig. 1: einen Schwingsaitensensor gemäss dem Stand der Technik,
- Fig. 2a: eine erfindungsgemässe Ausführungsform eines Schwingsaitensensors,
- Fig. 2b: einen vergrösserten Ausschnitt aus Fig. 2a mit der Schwingseite,
- Fig. 3: schematisch eine Ausführungsform einer erfindungsgemässen Schwingsaite in einem Schwingsaitensensor,
- Fig. 4: schematisch einer weitere Ausführungsform einer erfindungsgemässen Schwingsaite in einem Schwingsaitensensor,
- Fig. 5a: schematisch einer bevorzugte Ausführungsform einer erfindungsgemässen Schwingsaite in einem Schwingsaitensensor, und
- Fig. 5b: eine Ansicht auf die Schwingsaite von Fig. 5a.

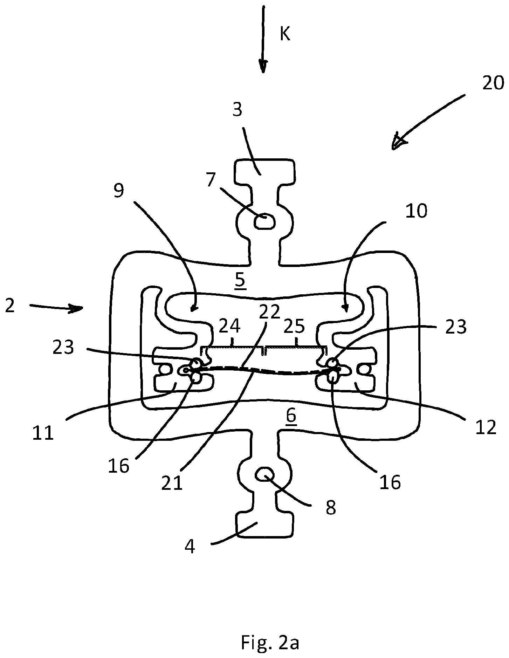

Figur 2a zeigt anhand einer bevorzugten Ausführungsform eines Schwingsaitensensors 20 das Prinzip der vorliegenden Erfindung. Der im Betrieb dargestellte Schwingsaitensensor 20 kann (muss aber nicht) den gleichen Grundaufbau besitzen wie der Schwingsaitensensor 1 von Fig. 1. Die Anordnung 17 (Figur 1) zur Erzeugung eines Magnetfelds fehlt jedoch. Ersichtlich ist eine Schwingsaite 21, die mit einer durch die gestrichelte Linie angedeuteten Erregerschicht 22, die eine piezoelektrische Aktivierungsschicht aufweist, wenigstens über einen Längenabschnitt, hier über ihre ganze Länge, bedeckt ist. Mögliche Ausführungsformen der Erregerschicht 22 sind in den Figuren näher beschrieben.

Über Klemmstifte 23 bzw. Kontaktelemente ist eine Wechselspannung an die Erregerschicht 22 angelegt. Die Wechselspannung wird durch eine zur Entlastung der Figur weggelassene Elektronik des Schwingsaitensensors 20 erzeugt. Die Figur zeigt einen Betriebszustand, in welchem auf Grund der angelegten Wechselspannung die piezoelektrische Aktivierungsschicht der Erregerschicht 22 im linken Abschnitt 24 einen Aktivierungszustand aufweist, bei welchem sie verlängert ist, und im rechten Abschnitt 25 einen Aktivierungszustand, bei welchem sie verkürzt ist.

Dadurch krümmt sich die Schwingsaite 21 in der Art einer Bimetallfeder, von links nach rechts gesehen im Abschnitt 24 nach rechts, im Abschnitt 25 nach links. Diese Krümmung entspricht einer Schwingungslage der Schwingsaite mit einem Schwingungsknoten in der Mitte ( Schwingfrequenzen über der Hörschwelle sind wünschenswert).

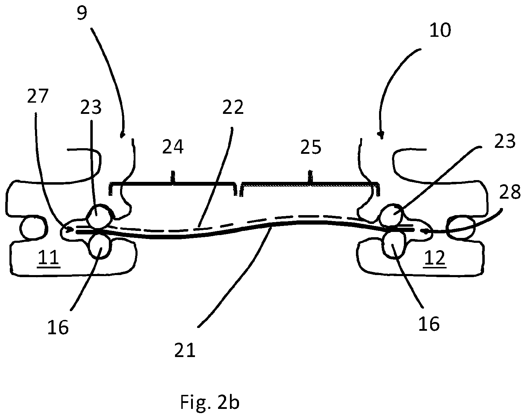

Figur 2b zeigt vergrössert einen Ausschnitt des Schwingsaitensensors 20 im Bereich der Schwingsaite 21, die gegenüber der Darstellung von Figur 2a jedoch eine andere Schwingungslage aufweist, entsprechend der eine Halbwelle später der an den Klemmstiften 23 wirksamen Wechselspannung. Die Erregerschicht 22 im linken Abschnitt 24 ist verkürzt, und im rechten Abschnitt 25 verlängert, so dass die Schwingsaite 21 im Abschnitt 24 nach links und im Abschnitt 25 nach rechts gekrümmt ist.

Der angelegten Wechselspannung entsprechend schwingt die Schwingsaite 21, angeregt durch die verschiedenen Aktivierungszustände der Erregerschicht 22, zwischen den in den Figuren 2a und 2b gezeigten Schwingungslagen hin und her, wobei die Frequenz der Wechselspannung durch die Elektronik verändert wird, bis die Schwingsaite 21 in ihrer aktuellen Eigenfrequenz schwingt. Die aktuelle Eigenfrequenz ist bestimmt durch die aktuelle Spannung der Schwingsaite 21, gegeben durch die Klemmstifte 16,23, welche die Schwingsaite 21 der Verschiebung der Messpunkte 7,8 (Figur 1) entsprechend auf Zug beanspruchen. Wie oben erwähnt, generiert die Elektronik auf Grund der aktuellen Eigenfrequenz ein Signal, welches der vom Sensor 20 zu detektierenden Deformation oder Kraft entspricht.

Es ergibt sich, dass die Erregeranordnung eines erfindungsgemässen Schwingsaitensensors wenigstens eine auf einem Längenabschnitt der Schwingsaite vorgesehene Erregerschicht mit einer piezoelektrischen Aktivierungsschicht aufweist, welche je nach Aktivierungszustand verschiedene Längen aufweist und dadurch eine entsprechend andere Schwingungslage der Schwingsaite hervorruft.

Weiter ergibt sich erfindungsgemäss eine Schwingsaite, die eine auf wenigstens einem Längenabschnitt vorgesehene piezoelektrische Erregerschicht aufweist, welche je nach Aktivierungszustand verschiedene Längen aufweist und dadurch eine Deformation der Schwingsaite über wenigstens einen Längenabschnitt hervorruft.

In einer alternativen Ausführungsform kann die Wechselspannung auch an den Endabschnitten 27,28 der Schwingsaite 21, angelegt werden. Damit ist es möglich, ein beliebiges, geeignetes Material für die Klemmstifte (oder Klemm- bzw. Halteelemente irgendwelcher Art) vorzusehen. Entsprechende Leiter, die von den Endabschnitten 27,28 zur Elektronik des Schwingsaitensensors 20 führen, sind zur Entlastung der Figur weggelassen.

Die Schwingsaite 21 ist im Querschnitt bevorzugt dünn und flach, beispielsweise rechteckig ausgebildet (kann aber auch etwa oval oder rund sein), und besitzt in der Schwingungsebene ein geringes Trägheitsmoment - die Schwingsaite ist flexibel, besitzt damit in ausgelenkter Lage kaum eine durch die Biegung gegebene federelastische Rückstellkraft, mit der Folge, dass sie aus einer ausgelenkten Lage im Wesentlichen durch den über die Einspannstellen ausgeübten Zug in ihre gestreckte Lage zurück schwingt. Diese Rückschwingung kann natürlich wesentlich durch die entsprechend getaktete piezoelektrische Aktivierungsschicht der Erregerschicht 22 unterstützt werden.

Die nachstehenden Figuren zeigen verschiedene Ausführungsformen eines Schwingsaitendetektors mit einer erfindungsgemässen Schwingsaite.

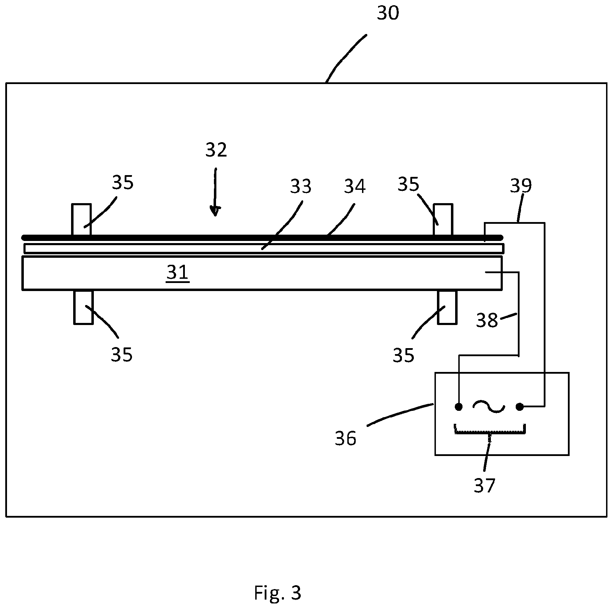

Figur 3 zeigt einen Schwingsaitensensor 30, schematisch angedeutet durch ein Rechteck, der bis auf die in der Figur 3 dargestellten Komponenten beispielsweise wie der Schwingsaitensensor 1 von Figur 1 ausgebildet sein kann. Der Schwingsaitensensor 30 weist eine Schwingsaite 31 auf, mit einer Erregerschicht 32, die eine piezoelektrische Aktivierungsschicht 33 sowie eine Elektrode 34 aufweist, welche sich über die Länge der Aktivierungsschicht 33 erstreckt. Die Schwingsaite 31 ist in Klemmen 35 eingespannt, die bevorzugt als Klemmstifte (Figur 1) ausgebildet sind, aber auch anders ausgebildet sein können. Eine schematisch angedeutete Elektronik 36 des Schwingsaitensensors besitzt eine Spannungsquelle 37, welche über einen Leiter 38 mit der Schwingsaite 31 und über einen Leiter 39 mit der Elektrode 34 verbunden ist. Die restlichen Bestandteile des Schwingsaitensensors sind zur Entlastung der Figur weggelassen, insbesondere Köpfe 11,12 (Figur 1), in welchen die Klemmen 35 angeordnet sind. Die Figur zeigt der besseren Darstellung wegen verzerrte Proportionen, die Schwingsaite 31 ist in Realität lang und dünn, z.B. 0,4 mm breit 0,3 mm hoch und 20 mm lang. Die Erregerschicht 32 ist dünn, entsprechend dem Herstellverfahren, s. unten.

Die Schwingsaite 31 besteht bevorzugt aus einer Beryllium - Bronze Legierung, die sehr hart ist, sich unter Zug kaum verlängert und nicht kriecht, also zum präzisen, driftsicheren Betrieb des Schwingsaitensensors beiträgt.

Die piezoelektrische Aktivierungsschicht 33 ist bevorzugt als AlScN Schicht ausgebildet, mit Scandium im Bereich von 15% bis 30%. Sie kann aber auch aus reinem AIN bestehen. Die Elektrode kann als dünne Schicht aus Gold ausgeführt werden.

Weiter bevorzugt ist die Aktivierungsschicht 33 durch Sputtern auf die Schwingsaite 31 aufgebracht, ebenso die Elektrode. Bevorzugt wird die Aktivierungsschicht 33 nach dem sputtern über die Curie - Temperatur erhitzt, durch ein geeignetes E-Feld polarisiert und dann abgekühlt, so dass sie piezoelektrisch aktivierbar ist. Es besteht auch die Möglichkeit die Piezoschicht direkt beim Sputtern zu polarisieren. Der Sputterprozess führt auch zu einer Ausprägung der Kristallorientierung resp. spezifischer Kristall-Typen, was die nachträgliche Polarisierung in gewissen Orientierungen erleichtern kann. Der Fachmann kennt Schwingsaiten der genannten Art sowie piezoelektrische Beschichtungen aus AlScN, die durch Sputtern hergestellt werden können.

Die Elektronik 36 ist wie oben erwähnt ausgebildet, im Betrieb eine Wechselspannung abzugeben, beispielsweise mit einer Startfrequenz, die nahe bei der Eigenfrequenz der Schwingsaite 31 im Ruhezustand des Schwingsaitensensors 30 liegt. Danach wird die Frequenz erhöht, bis die Schwingsaite 31 in ihre Eigenfrequenz fällt, was wiederum durch die Elektronik an deren Impedanz erkannt werden kann - bei der Eigenfrequenz ist der Scheinwiderstand z der Anordnung Elektrode - piezoelektrische Aktivierungsschicht - Elektrode minimal (diese Anordnung stellt eine Kapazität dar). Wie erwähnt ist die Eigenfrequenz ein Mass für den auf die Schwingsaite 31 wirkenden Zug, dieser wiederum ein Mass für die zu detektierende Deformation bzw. Kraft, so dass die Elektronik 36 aus der erkannten, aktuellen Eigenfrequenz der Schwingsaite 31 ein Signal der detektierten aktuellen Grösse (Deformation, Kraft) generieren kann.

Es ergibt sich, dass die Erregerschicht 32 Elektroden 34, 31 aufweist, welche die Aktivierungsschicht zwischen sich einfassen, und wobei die Schwingsaite 31 eine der Elektroden bildet. In diesem Fall kann die Schwingsaite auf der Seite der piezoelektrischen Aktivierungsschicht 33 ihrerseits mit Gold beschichtet sein, um ihre Leitfähigkeit zu verbessern.

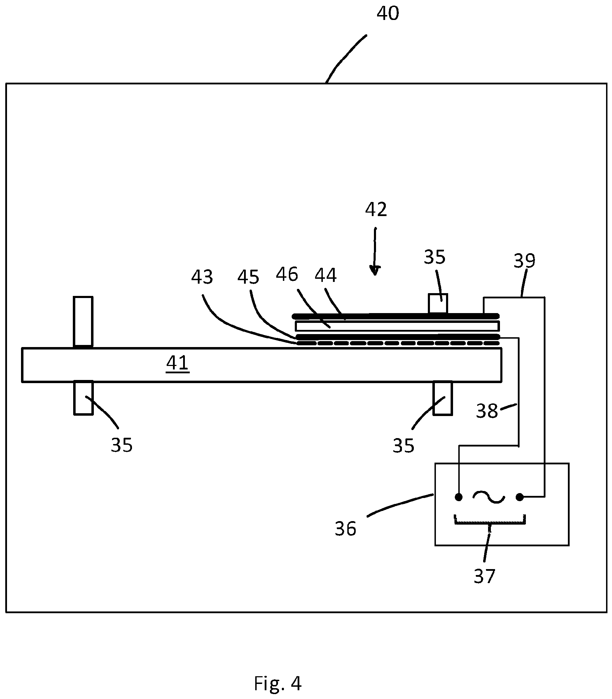

Figur 4 zeigt einen Schwingsaitensensors 40, mit einer weiteren Ausführungsform einer Schwingsaite 41, die nur über einen Längenabschnitt mit einer Erregerschicht 42 versehen ist. Zudem ist die Erregerschicht 42 gegenüber der Schwingsaite 41 durch eine in der Figur gestrichelt dargestellte Isolationsschicht 43, beispielsweise aus Al₂O₃, Aluminiumoxid oder ZnO, Zinkoxyd, elektrisch isoliert. Neben einer oberen Elektrode 44 ist entsprechend eine untere (d.h. bei der Schwingsaite 41 angeordnete) Elektrode 45 vorgesehen, die Spannungsquelle 37 der Elektronik 36 ist über den Leiter 38 mit der unteren Elektrode 45 und mit dem Leiter 39 mit der oberen Elektrode 44 verbunden. Die piezoelektrische Aktivierungsschicht 46 ist über ihre Länge durch Elektroden 44,45 eingefasst.

Die gezeigte Anordnung erlaubt, einen Stromfluss durch die Schwingsaite 41 zu vermeiden, die auf Grund ihrer Legierung (wenig Längendehnung und kriecharm, s. oben) einen hohen ohmschen Widerstand aufweist. Damit sind im Wechselspannungskreis nur vergleichsweise geringe ohmsche Widerstände vorhanden. Zudem ist der Energiebedarf der Erregerschicht 42 grundsätzlich, und bei Eigenfrequenz der Schwingsaite 41 besonders ausgeprägt tief. Es ergibt sich gegenüber einem konventionellen Schwingsaitensensor 1 (Figur 1) ein Stromkonsum von noch 30% bis 20%.

Es ergibt sich, dass an der Innenseite der Erregerschicht eine Elektrode angeordnet ist, die sich über im Wesentlichen die Länge der Erregerschicht erstreckt.

Die gezeigte Anordnung erlaubt, die Schwingsaite zu einer Schwingung mit einem Schwingungsknoten anzuregen.

Wie bei der in der Figur 3 gezeigten Ausführungsform erstreckt sich eine Elektrode 34 bzw. 44,45 vom schwingenden Abschnitt der Schwingsaite 31 bzw. 41 her durch die entsprechende Einspannstelle, gegeben durch den Ort der Klemmen 35. Dies erlaubt, diese Elektrode besonders einfach mit einem zugeordneten Leiter 38, 39 zu verbinden, da der Bereich hinter den Einspannstellen für die Verbindung mit Elektroden 34,44,45 leichter zugänglich ist und dort die Schwingsaite 31,41 für geeignete Verbindung verbreitert werden kann.

Ausgehend von der in der Figur gezeigten Ausführungsform mit einer Erregerschicht, welche auf der rechten Seite der Schwingsaite 41 vorgesehen ist, kann weiter eine bevorzugt gleich aufgebaute zweite Erregerschicht auf der linken Seite der Schwingsaite 41 vorgesehen werden, die weiter bevorzugt auf deren gegenüberliegenden Seite angeordnet ist. Dann sind zwei Erregerschichten vorgesehen, die sich auf verschiedenen Seiten der Schwingsaite befinden, was erlaubt, im Betrieb die sich ausbildende Schwingung der Schwingsaite besonders präzis anzustossen und gegen die aktuelle Eigenfrequenz der Schwingsaite zu führen.

Es ergibt sich eine Schwingsaite bei welcher zwei Erregerschichten vorgesehen sind, die auf der gleichen Seite oder auf verschiedenen Seiten der Schwingsaite angeordnet sind.

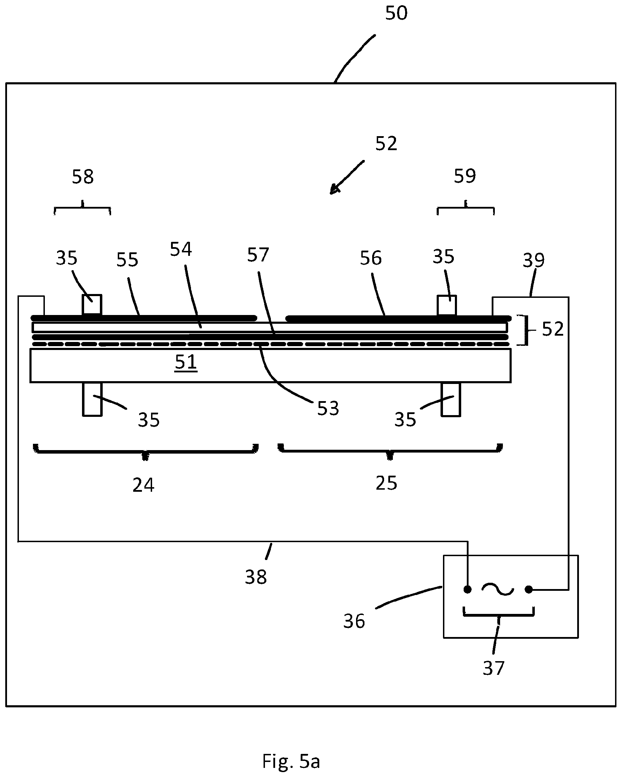

Fig. 5a zeigt eine bevorzugte Ausführungsform der vorliegenden Erfindung, mit einem wiederum nur schematisch angedeuteten Schwingsaitensensor 50, mit einer Schwingsaite 51, die über die Klemmen 35 in ihm eingespannt ist. Eine Erregerschicht 52 erstreckt sich im Wesentlichen über die ganze Länge der Schwingsaite 51, ist durch eine wiederum gestrichelt angedeutete Isolationsschicht 53 von dieser isoliert und weist eine durchgehende piezoelektrische Aktivierungsschicht 54 auf, welche von äusseren Elektroden 55,56 und einer inneren Elektrode 57 eingefasst ist.

Die beiden äusseren Elektroden 55,56 sind voneinander getrennt, wobei die eine Elektrode 55,56 mit dem Leiter 38 der Spannungsquelle 37 verbunden ist, und die andere Elektrode 56,55 mit dem Leiter 39. Einer dieser Leiter 38,39 ist als Neutralleiter geschaltet, der andere Leiter 39,38 als spannungsführender Leiter, d.h. Phase.

Diese Anordnung entspricht zwei in Serie geschalteten Kondensatoren: Wird beispielsweise der Leiter 39 als spannungsführender Leiter geschaltet, ergibt sich im Betrieb ein wechselndes E -Feld zwischen der oberen Elektrode 56 und der unteren Elektrode 57, welches einmal den dazwischen liegenden rechten Abschnitt 25 (s. dazu z.B. Figur 2b) der piezoelektrischen Aktivierungsschicht 54 aktiviert, was je nach der Richtung des E-Felds und der Polarisierung der piezoelektrischen Schicht 54 zu einer Dickenänderung und damit auch zu einer Längenänderung dieses Abschnitts und damit zu einer Krümmung der Schwingsaite 51 im rechten Abschnitt 25 führt.

Mit der Ausbildung dieses E-Felds im rechten Abschnitt 25 ergibt sich eine Ladungsverschiebung in der unteren Elektrode 57, welche damit im linken Abschnitt 24 entgegengesetzt zu ihrem rechten Abschnitt 25 geladen ist, was wiederum zusammen mit der äusseren Elektrode 55 zu einem E-Feld im linken Abschnitt 24 führt, das zu dem E-Feld im rechten Abschnitt 25 entgegengesetzt gerichtet ist. Die Längenänderung im Abschnitt 24 ist damit derjenigen vom Abschnitt 25 entgegengesetzt, damit ebenso die Krümmung der Schwingsaite 51, was eine Schwingungslage mit einem Schwingungsknoten in der Mitte der Schwingsaite 51 ergibt.

Bei der nächsten Halbwelle der angelegten Wechselspannung wird die Schwingsaite 51 umgekehrt gekrümmt, nimmt also eine entsprechend andere Schwingungslage ein. Ihre Eigenfrequenz wird von der Elektronik 36 wiederum durch ein Minimum des Scheinwiderstands z erkannt.

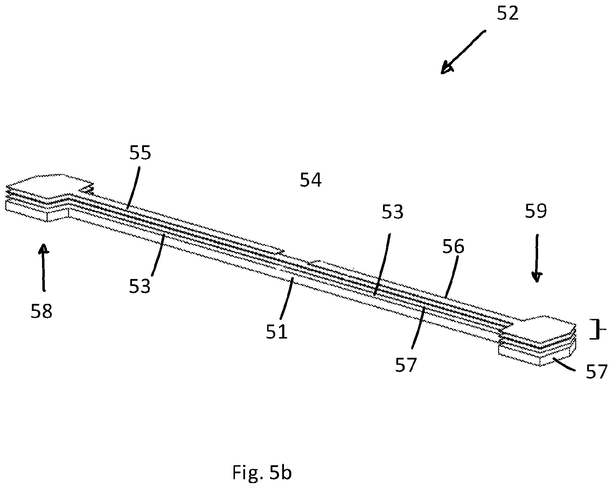

Figur 5b zeigt eine dreidimensionale Ansicht der Schwingsaite 51 von Figur 5a in der Art einer Explosionszeichnung, mit realen Proportionen. Die Endbereiche 58,59 sind verbreitert, was die endseitige Klemmung verbessert.

Die Anordnung gemäss den Figuren 5a und 5b ist besonders vorteilhaft, da die Schwingsaite durch einen einfachen Aufbau (vor allem durch gleiche Polarisation der piezoelektrischen Erregerschicht über deren Länge) über ihre ganze Länge für die gewünschte Schwingungsform mit einem Schwingungsknoten angeregt werden kann.

Es ergibt sich ein erfindungsgemässer Schwingsaitensensor, bei welchem sich die Erregerschicht vom einen Einspannungsbereich 58,59 der Schwingsaite 51 bis zum anderen Einspannungsbereich 59,58 erstreckt und zwei Elektroden 55,56 vorgesehen sind, welche sich auf der gleichen Seite der Erregerschicht 52 von den gegenüberliegenden Einspannungsbereichen 58,59 aus gegeneinander bis hin zur Mitte der Erregerschicht 52 erstrecken, und wobei auf der gegenüberliegenden Seite der Erregerschicht 52 eine zwischen den Einspannungsbereichen 58,59 durchgehende Elektrode 53 vorgesehen ist. Bevorzugt befindet sich dabei, wie in den Figuren 5a und 5b dargestellt, die durchgehende Elektrode 53 auf der Innenseite der Erregerschicht 52 befindet. Weiter bevorzugt ist eine der äusseren Elektroden 55,56 mit einem spannungsführenden Leiter einer Wechselspannungsquelle und die andere äussere Elektrode mit einem Neutralleiter verbunden. Dabei ist weiter bevorzugt an einer Aussenseite der piezoelektrischen Aktivierungsschicht 54 eine Elektrode 56,57 vorgesehen ist, die sich wenigstens über einen Längenabschnitt der Erregerschicht 52 erstreckt.

Die entsprechend bevorzugt ausgebildete Schwingsaite ist mit einer Erregerschicht 52 versehen, die auf ihrer einen Seite durchgehend eine Elektrode 57 und auf ihrer gegenüberliegenden Seite zwei Elektroden 55,56 aufweist, welche ausgehend von den Endbereichen 58,59 bis hin gegen die Mitte der Schwingsaite 52 reichen.

Bei einer in den Figuren nicht dargestellten, derjenigen gemäss den Figuren 5a, 5b ähnlichen Ausführungsform ist die piezoelektrische Aktivierungsschicht nicht durchgehend, sondern in der Mitte der Schwingsaite unterbrochen, so dass beispielsweise der spannungsführende Leiter mit der unteren, durchgehenden Elektrode verbunden werden kann.

Im konkreten Fall kann der Fachmann die verschiedenen Merkmale gemäss den oben dargestellten Ausführungsbeispielen geeignet kombinieren.

## Patentansprüche

1. Schwingsaitensensor (20,30,40,50) mit einer eine Legierung aufweisenden Schwingsaite (21,31,41,51), die unter Messbedingungen einer zu detektierenden aktuellen Grösse entsprechend unterschiedlich gespannt wird, und mit einer Erregeranordnung zum Erregen der Schwingsaite (21,31,41,51) im Bereich ihrer jeweiligen Eigenfrequenz, wobei die Erregeranordnung wenigstens eine auf einem Längenabschnitt der Schwingsaite (21,31,41,51) vorgesehene Erregerschicht (22,32,42,52) mit einer piezoelektrischen Aktivierungsschicht (33,46,54) aufweist, welche je nach Aktivierungszustand verschiedene Längen aufweist und dadurch eine entsprechend andere Schwingungslage der Schwingsaite (21,31,41,51) hervorruft, wobei die Erregeranordnung ausgebildet ist, im Betrieb ein Minimum der Impedanz der erregten Schwingseite zu erkennen um deren Eigenfrequenz zu bestimmen.

2. Schwingsaitensensor (30) nach Anspruch 1, wobei die Erregerschicht (32) Elektroden (34,31) aufweist, welche die piezoelektrische Aktivierungsschicht (33) zwischen sich einfassen, und wobei die Schwingsaite (31) eine der Elektroden bildet.

3. Schwingsaitensensor (40,50) nach Anspruch 1, wobei die Erregerschicht (46,54) gegenüber der Schwingsaite (41,51) elektrisch isoliert ist.

4. Schwingsaitensensor (30,40,50) nach Anspruch 1, wobei an einer Aussenseite der piezoelektrischen Aktivierungsschicht (33,46,54) eine Elektrode (34,44,55,56) vorgesehen ist, die sich wenigstens über einen Längenabschnitt der Erregerschicht (32,42,52) erstreckt.

5. Schwingsaitensensor nach Anspruch 1, wobei eine Elektrode (33,44,45) sich vom schwingenden Abschnitt der Schwingsaite (31,41,51) her durch die Einspannstelle (58,59) erstreckt.

6. Schwingsaitensensor (40,50) nach Anspruch 1, wobei an der Innenseite der Erregerschicht (42,52) eine Elektrode (43,53) angeordnet ist, die sich über im Wesentlichen die Länge der Erregerschicht (42,52) erstreckt.

7. Schwingsaitensensor nach Anspruch 1, wobei zwei Erregerschichten vorgesehen sind, die sich auf verschiedenen Seiten der Schwingsaite befinden.

8. Schwingsaitensensor nach Anspruch 1, wobei sich die Erregerschicht vom einen Einspannungsbereich (58,59) der Schwingsaite (51) bis zum anderen Einspannungsbereich (59,58) erstreckt und zwei Elektroden (55,56) vorgesehen sind, welche sich auf der gleichen Seite der Erregerschicht (52) von den gegenüberliegenden Einspannungsbereichen (58,59) aus gegeneinander bis hin zur Mitte der Erregerschicht (52) erstrecken, und wobei auf der gegenüberliegenden Seite der Erregerschicht (52) eine zwischen den Einspannungsbereichen (58,59) durchgehende Elektrode (57) vorgesehen ist.

9. Schwingsaitensensor nach Anspruch 7, wobei sich die durchgehende Elektrode (57) auf der Innenseite der Erregerschicht (52) befindet.

10. Schwingsaitensensor nach Anspruch 7, wobei eine der äusseren Elektroden (55,56) mit einen spannungsführenden Leiter (38,39) und die andere äussere Elektrode (39,38) mit einem Neutralleiter einer Wechselspannungsquelle (37) verbunden ist.

11. Aus einer Legierung bestehende Schwingsaite (21,31,41,51) für einen Schwingsaitensensor nach Anspruch 1, **dadurch gekennzeichnet, dass** sie eine auf wenigstens einem Längenabschnitt vorgesehene piezoelektrische Erregerschicht (22,32,42,52) aufweist, welche je nach Aktivierungszustand verschiedene Längen aufweist und dadurch eine Deformation der Schwingsaite über wenigstens einen Längenabschnitt hervorruft.

12. Schwingsaite (41,51) nach Anspruch 11, wobei die Erregerschicht (42,52) ihr gegenüber elektrisch isoliert ist.

13. Schwingsaite (51) nach Anspruch 11, wobei die Erregerschicht (52) auf ihrer einen Seite durchgehend eine Elektrode (57) aufweist und auf ihrer gegenüberliegenden Seite zwei Elektroden (55,56) aufweist, welche ausgehend von den Endbereichen (58,59) bis hin gegen die Mitte der Schwingsaite reichen.

14. Schwingsaite nach Anspruch 11, wobei zwei Erregerschichten vorgesehen sind, die auf der gleichen Seite oder auf verschiedenen Seiten der Schwingsaite angeordnet sind.

## Claims

1. Vibrating wire sensor (20, 30, 40, 50) having a vibrating wire (21, 31, 41, 51) which has an alloy and is tensioned differently under measurement conditions corresponding to a current variable to be detected, and having an exciter arrangement for exciting the vibrating wire (21, 31, 41, 51) in the range of its respective natural frequency, the exciter arrangement having at least one exciter layer (22, 32, 42, 52) which is provided on a length section of the vibrating wire (21, 31, 41, 51) and has a piezoelectric activation layer (33, 46, 54) which has different lengths depending on the activation state (51), with a piezoelectric activation layer (33, 46, 54), which has different lengths depending on the activation state and thereby causes a correspondingly different oscillation position of the vibrating string (21, 31, 41, 51), the exciter arrangement being designed to recognize a minimum of the impedance of the excited vibrating side during operation in order to determine its natural frequency.

2. Vibrating wire sensor (30) according to claim 1, wherein the excitation layer (32) has electrodes (34, 31) which enclose the piezoelectric activation layer (33) between them, and wherein the vibrating wire (31) forms one of the electrodes.

3. Vibrating wire sensor (40, 50) according to claim 1, wherein the excitation layer (46, 54) is electrically insulated from the vibrating wire (41, 51).

4. Vibrating wire sensor (30, 40, 50) according to claim 1, wherein an electrode (34, 44, 55, 56) is provided on an outer side of the piezoelectric activation layer (33, 46, 54), which electrode extends at least over a length section of the excitation layer (32, 44, 52).

5. Vibrating wire sensor according to claim 1, wherein an electrode (33, 44, 45) extends from the vibrating portion of the vibrating wire (31, 41, 51) through the clamping point (58, 59).

6. Vibrating wire sensor (40, 50) according to claim 1, wherein an electrode (43, 53) is arranged on the inside of the excitation layer (42, 52), which electrode extends over substantially the length of the excitation layer (42, 52).

7. Vibrating wire sensor according to claim 1, wherein two excitation layers are provided which are located on different sides of the vibrating wire.

8. Vibrating wire sensor according to claim 1, wherein the excitation layer extends from one tensioning region (58, 59) of the vibrating wire (51) to the other tensioning region (59, 58) and two electrodes (55, 56) are provided which extend on the same side of the excitation layer (52) from the opposite tensioning regions (58, 59) towards each other up to the center of the excitation layer (52), and wherein on the opposite side of the excitation layer (52) an electrode (55, 56) extending between the tensioning regions (58, 59) is provided,59) towards each other as far as the center of the excitation layer (52), and wherein an electrode (57) passing between the clamping regions (58, 59) is provided on the opposite side of the excitation layer (52).

9. Vibrating wire sensor according to claim 7, wherein the continuous electrode (57) is located on the inside of the excitation layer (52).

10. Vibrating wire sensor according to claim 7, wherein one of the outer electrodes (55, 56) is connected to a live conductor (38, 39) and the other outer electrode (39, 38) is connected to a neutral conductor of an AC voltage source (37).

11. Vibrating string (21, 31, 41, 51) consisting of an alloy for a vibrating string sensor according to claim 1, **characterized in that** it has a piezoelectric excitation layer (22, 32, 42, 52) provided on at least one length section, which has different lengths depending on the activation state and thereby causes a deformation of the vibrating string over at least one length section.

12. Vibrating string (41, 51) according to claim 11, wherein the excitation layer (42, 52) is electrically insulated from it.

13. Vibrating string (51) according to claim 11, wherein the excitation layer (52) has an electrode (57) on one side and two electrodes (55, 56) on its opposite side, which extend from the end regions (58, 59) to the center of the vibrating string.

14. Vibrating string according to claim 11, wherein two excitation layers are provided which are arranged on the same side or on different sides of the vibrating string.

## Revendications

1. Capteur à corde vibrante (20, 30, 40, 50) avec une corde vibrante (21, 31, 41, 51) présentant un alliage, qui est tendue différemment dans des conditions de mesure d'une grandeur actuelle à détecter, et avec un dispositif d'excitation pour exciter la corde vibrante (21, 31, 41, 51) dans la zone de sa fréquence naturelle respective, le dispositif d'excitation comprenant au moins une couche de matériau électrostatique sur un tronçon de longueur de la corde vibrante (21, 31, 41, 51) avec une couche d'activation piézoélectrique (33, 46, 54) qui présente des longueurs différentes selon l'état d'activation et provoque ainsi une position d'oscillation différente correspondante de la corde vibrante (21, 31, 41, 51), le dispositif d'excitation étant conçu pour détecter en fonctionnement un minimum de l'impédance du côté vibrant excité afin de déterminer sa fréquence naturelle.

2. Capteur à corde vibrante (30) selon la revendication 1, dans lequel la couche d'excitation (32) comprend des électrodes (34, 31) qui enserrent entre elles la couche d'activation piézoélectrique (33), et dans lequel la corde vibrante (31) forme l'une des électrodes.

3. Capteur à corde vibrante (40, 50) selon la revendication 1, dans lequel la couche d'excitation (46, 54) est isolée électriquement de la corde vibrante (41, 51).

4. Capteur à corde vibrante (30, 40, 50) selon la revendication 1, une électrode (34, 44, 55, 56) étant prévue sur un côté extérieur de la couche d'activation piézoélectrique (33, 46, 54), laquelle s'étend au moins sur un tronçon de longueur de la couche d'excitation (32, 44, 52).

5. Capteur à corde vibrante selon la revendication 1, dans lequel une électrode (33, 44, 45) s'étend depuis la partie vibrante de la corde vibrante (31, 41, 51) à travers le point de fixation (58, 59).

6. Capteur à corde vibrante (40, 50) selon la revendication 1, dans lequel une électrode (43, 53) est disposée sur le côté intérieur de la couche d'excitation (42, 52), laquelle s'étend sensiblement sur la longueur de la couche d'excitation (42, 52).

7. Capteur à corde vibrante selon la revendication 1, dans lequel il est prévu deux couches d'excitation qui se trouvent sur des côtés différents de la corde vibrante.

8. Capteur à corde vibrante selon la revendication 1, dans lequel la couche d'excitation s'étend d'une zone de serrage (58, 59) de la corde vibrante (51) à l'autre zone de serrage (59, 58) et deux électrodes (55, 56) sont prévues, qui s'étendent sur le même côté de la couche d'excitation (52) depuis les zones de serrage opposées (58,59) s'étendent l'une vers l'autre jusqu'au milieu de la couche d'excitation (52), et une électrode (57) continue entre les zones de serrage (58, 59) étant prévue sur le côté opposé de la couche d'excitation (52).

9. Capteur à corde vibrante selon la revendication 7, dans lequel l'électrode continue (57) est située sur la face interne de la couche d'excitation (52).

10. Capteur à corde vibrante selon la revendication 7, dans lequel l'une des électrodes extérieures (55, 56) est reliée à un conducteur sous tension (38, 39) et l'autre électrode extérieure (39, 38) est reliée à un conducteur neutre d'une source de tension alternative (37).

11. Corde vibrante (21, 31, 41, 51) constituée d'un alliage pour un capteur à corde vibrante selon la revendication 1, **caractérisée en ce qu'**elle présente une couche d'excitation piézoélectrique (22, 32, 42, 52) prévue sur au moins un tronçon de longueur, qui présente différentes longueurs selon l'état d'activation et provoque ainsi une déformation de la corde vibrante sur au moins un tronçon de longueur.

12. Corde vibrante (41, 51) selon la revendication 11, la couche d'excitation (42, 52) étant isolée électriquement de celle-ci.

13. Corde vibrante (51) selon la revendication 11, dans laquelle la couche d'excitation (52) présente sur l'une de ses faces une électrode (57) continue et sur sa face opposée deux électrodes (55, 56) qui s'étendent depuis les zones d'extrémité (58, 59) jusqu'au centre de la corde vibrante.

14. Corde vibrante selon la revendication 11, dans laquelle il est prévu deux couches d'excitation qui sont disposées sur le même côté ou sur des côtés différents de la corde vibrante.
